# EUROPÄISCHE PATENTSCHRIFT

(11) **EP 0 800 589 B1**
(45) Veröffentlichungstag und Bekanntmachung des Hinweises auf die Patenterteilung: **12.07.2000**
(21) Anmeldenummer: 95916678.6
(22) Anmeldetag: 20.04.1995
(51) Int. Cl.: C14C 9/00, B01F 17/00

(54) **MITTEL UND VERFAHREN ZUR HYDROPHOBIERUNG VON LEDERN UND PELZEN**
AGENTS AND PROCESS FOR WATERPROOFING LEATHER AND HIDES
AGENTS ET PROCEDE POUR L'IMPERMEABILISATION DES CUIRS ET DES PEAUX

(30) Priorität: 29.04.1994 DE 4415062
(43) Veröffentlichungstag der Anmeldung: 15.10.1997
(73) Patentinhaber: STOCKHAUSEN GmbH & CO. KG, 47805 Krefeld (DE)
(72) Erfinder: LOHMANN, Helmut, D-47802 Krefeld (DE); HÜBNER, Wolfgang, D-47906 Kempen (DE); STRIJBOS, Leonardus, D-47918 Tönisvorst (DE); INGER, Waldemar, D-47829 Krefeld (DE)
(74) Vertreter: Wolff, Felix, Dr.
(86) Internationale Anmeldenummer: EP9501491
(87) Internationale Veröffentlichungsnummer: WO9530028

(56) Entgegenhaltungen:
- EP-A- 0 280 152
- EP-A- 0 344 442

## Beschreibung

Die Erfindung betrifft Mittel zur Hydrophobierung von Ledern und Pelzen, die wenigstens ein Silicon und als Emulgator für das Silicon Alkyl- und/oder Alkylarylpolyalkylolethercarbonsäuren und/oder deren Derivate, insbesondere deren Alkali-, Erdalkali-, Ammoniak-, Amin- und/oder Alkanolaminsalze enthalten sowie die Verwendung dieser Mittel bei der Herstellung von Ledern und Pelzen, insbesondere zur Hydrophobierung.

Zur Verbesserung der Leder- und Pelzeigenschaften durch Verringerung der Wasseraufnahme und -durchlässigkeit bei gleichzeitiger Durchlässigkeit von Wasserdampf, sind Mittel und Behandlungsmethoden, insbesondere unter Verwendung von Siliconen als Hydrophobierungsmittel bekannt.
Die US 2 798 858 beschreibt bereits ein Verfahren, bei dem mit wäßrigen Emulsionen von Siliconen und Metallsalzen, vorzugsweise mit Zirkonacetat, unter Verwendung von Diolen als emulsionsstabilisierende und die Penetration des Siliconöls fördernden Zusätze wasserabweisende Leder hergestellt wurden.
In der DE-AS 14 44 986 wird die Behandlung von Ledern mit wasserlöslichen, aus Aminosiloxanen und Hydroxylgruppen-haltigen Dimethylsiloxanen gebildeten Umsetzungsprodukten angegeben, die jedoch eine Nachbehandlung der trockenen Leder mit in organischen Lösungsmitteln gelösten Siliconen erfordert.
Aus DE-OS 19 15 482 ist ein Verfahren zum Imprägnieren von Ledern mit Mischpolymerisaten aus Aminoalkyl- und Dimethylsiloxanen und Polydimethylsiloxanen, die gelöst in organischen Lösungsmitteln bzw. in wäßriger Dispersion vorliegen, bekannt. In US 4 065 258 wird die Verwendung epoxidhaltiger Silicone in Lösungsmitteln zur Lederbehandlung im Trockenreinigungsprozeß angegeben.

Die EP 0 055 606 A1 und EP 0 200 916 B1 beschreiben wiederum wäßrige Emulsionen von Siliconen, die unter Verwendung bekannter Tenside bzw. unter Kombination von nichtionogenen Emulgatoren mit HLB-Werten von über 13 bzw. über 16 hergestellt werden. Da diese Emulgatoren hydrophile und netzende Eigenschaften aufweisen und auch durch weitere Behandlungsstufen nicht in die Materialien eingebunden werden, beeinträchtigen sie die gewünschten hydrophoben Eigenschaften der Leder und Pelze.
Die DE-OS 25 55 048 und die DE 30 24 870 C1 beschreiben daher Verfahren zur Herstellung von Silicon- und Paraffinemulsionen, die unter Einwirkung starker Scherkräfte, aber auch unter Verwendung von Oxalkylaten aus gelartigen Mischungen erzeugt werden.
In EP 0 213 480 B1 wird ein Verfahren zum Hydrophobieren beschrieben, bei dem das Salz einer N(C₉-C₂₀-Acyl)-aminosäure als Emulgator für Siliconöl, insbesondere für ein durch Mercaptogruppen funktionalisiertes Siliconöl eingesetzt wird.
Nach US 2 964 425 und DE-OS 22 19 806 sind N(C₉-C₂₀-Acyl)-aminosäuren und ihre Salze selbst als Fettungsmittel und zur Ausrüstung von hydrophoben Ledern und Pelzen bekannt.
Bei der Verwendung dieser Emulgatoren ist, insbesondere bei pH-Werten der Flotte unter 4,5, eine mangelnde Stabilität des Dispersionszustandes der Behandlungsflotte festzustellen, die dazu führt, daß die Hydrophobierkomponente ungleichmäßig verteilt wird und die Handhabung der Flotte beeinträchtigt wird. Eine Ursache dieser Störungen kann in der unzureichenden Hydrolysebeständigkeit der genannten Emulgatoren bestehen.

In der weiteren Entwicklung ist nach EP 0 324 345 B1 ein Verfahren bekannt geworden. bei dem durch neutralisierte Carboxylgruppen funktionalisierte Polysiloxane, d.h. ohne Emulgatoren verwendet werden, und bei dem weiterhin die Metallsalzfixierung in der Nachbehandlung ausgelassen werden soll. Die ausschließliche Verwendung dieser modifizierten Silicone ist jedoch wegen der Kosten aus wirtschaftlicher Sicht nachteilig.

In DE 39 28 978 A1 werden ethoxilierte Fettsäureamide beschrieben, die in Mischung mit Siliconen als Textilweichmacher wirken. Sie sind für die Verwendung zur Lederhydrophobierung aber nicht wirksam.

Alkyl-(aryl)-polyalkylolethercarbonsäuren sowie deren Salze sind als Tenside bekannt. In EP 0 488 467 A2 wird ein Herstellungsverfahren mit großen Ausbeuten an Polyalkylolethercarbonsäuren angegeben. Die DE 42 24 362 Al beschreibt ein Verfahren zur Herstellung dieser Stoffe unter Verminderung des Restpolyglykolethergehaltes und die Verwendung dieser Tenside als Zusatz bei der Herstellung von Wasch-, Spül- und Reinigungsmitteln sowie bei der Herstellung von Produkten für die Körper- und Reinigungspflege.So sind nach EP 440 542 B1 Waschzusammensetzungen bekannt, die aus den genannten Verbindungen und flüchtigen und nichtflüchtigen Siliconen und anionischen, zwitterionischen, nichtionogenen, hydrophilen Mitteln bestehen und die als Shampoo, Waschcreme oder Duschgel vorliegen. Die genannten Tenside werden außerdem zur Herstellung von kosmetischen und pharmazeutischen Präparaten als Netz- und Färbereihilfsmittel sowie als Zusatz in Kühlschmiermitteln, in Kunststoffen und in Kaltreinigern sowie bei der Emulsionspolymerisation und als Zusatz in Flutmedien bei der tertiären Erdölförderung vorgeschlagen. Als Emulgatoren für Metallbearbeitungsflüssigkeiten weisen sie neben Härtestabilität und Kalkdispergiervermögen schwach schäumende Eigenschaften auf, ohne daß die Nachteile auftreten, die bei Fettsäuren und Siliconen beim Einsatz als Entschäumer beobachtet werden.

Aufgabe der Erfindung ist es daher, die bei der Hydrophobierung von Ledern und Pelzen mit siliconölhaltigen Mitteln auftretenden Probleme wie mangelnde Stabilität des Dispersionszustandes, insbesondere bei niedrigen pH-Werten, zu überwinden, wobei durch eine Verbesserung im Dispersionszustand, insbesondere auch bei pH-Werten unterhalb von 4,5, eine gleichmäßigere und damit verbesserte Hydrophobierung erreicht wird.

Diese Aufgabe wird gelöst durch Mittel zur Hydrophobierung von Ledern und Pelzen, und zwar sowohl wasserfreie als auch wasserhaltige, die als Emulgator für das Silicon mindestens eine Alkylpolyalkylolethercarbonsäure und/oder Alkylarylpolyalkylolethercarbonsäure und/oder eines ihrer Derivate, bevorzugt eines Alkali-, Erdalkali-, Ammoniak-, Amin- und/oder Alkanolaminsalzes enthalten. Diese erfindungsgemäßen Emulgatoren liefern stabile Emulsionen von Siliconöl in Wasser oder wäßrigen Medien. Ihre Eigenschaften lassen sich vorteilhaft unter den Bedingungen der Leder- und Pelzherstellung. insbesondere bei der Hydrophobierung dieser Materialien, nutzen.

Gegenstand der Erfindung sind daher Mittel zur Hydrophobierung von Leder und Pelzen, enthaltend mindestens ein Silicon und mindestens einen Emulgator, die dadurch gekennzeichnet sind, daß sie als Emulgator mindestens eine Alkylpolyalkylolethercarbonsäure und/oder Alkylarylpolyalkylolethercarbonsäure und/oder ein Alkali-, Erdalkali-, Ammoniak-, Amin- oder Alkanolaminsalz dieser Carbonsäuren enthalten.

Die erfindungsgemäß zu verwendenden Alkyl- und/oder Alkylarylpolyalkylolethercarbonsäuren entsprechen der Formel 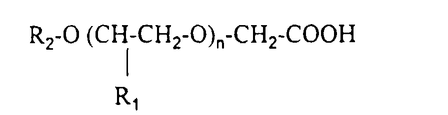 wobei
- R₁: H, CH₃ und
- R₂: - einen n- oder iso-Alkylrest mit 9 bis 30 C-Atomen, vorzugsweise mit 12 bis 22 C-Atomen. der gegebenenfalls eine oder mehrere olefinische Gruppen enthalten kann,
- einen Alkylarylrest oder Dialkylarylrest. bevorzugt bestehend aus einer Dialkylphenylgruppe mit Alkylresten mit 6 bis 10 C-Atomen, vorzugsweise 8 und/oder 9 C-Atomen,
   und
- n einen Zahlenwert von 1 bis 20, vorzugsweise 1 bis 8 und insbesondere bevorzugt 1,5 bis 6 bedeuten.

Vorzugsweise werden Fettalkoholpolyalkylolethercarbonsäuren mit 12 - 22 C-Atomen in der Alkylgruppe und 1,5 - 6 Glykoleinheiten eingesetzt.

Die Verwendung der Alkyl- und/oder Alkylarylpolyalkylolethercarbonsäuren und/oder deren Salze kann außer zur Hydrophobierung auch an anderer Stelle im Herstellungsprozeß für Leder und Pelze und deren weitere Erzeugnisse erfolgen. Beispielsweise können sie auch als Fettungsmittel für Leder zur Verbesserung der Weichheit und Narbenfestigkeit eingesetzt werden.
Die Alkyl- und Alkylarylpolyalkylolethercarbonsäuren werden als Säuren und/oder als Derivate, insbesondere als Salze eingesetzt, wobei Alkali-, Ammonium-, Erdalkali-, Alkylamin- und Polyalkylamin- und/oder Mono-, Di- oder Tri-Alkanolaminsalze wie Mono-, Di- oder Triethanolaminsalze zur Anwendung kommen.

Bevorzugt werden die bei Raumtemperatur flüssigen Polyglykolethercarbonsäuren mit Di- und Triglykoleinheiten von Lauryl-, Oleylalkohol sowie von Stearylalkohol und/oder deren Salze verwendet. Besonders bevorzugt sind die bei Raumtemparatur flüssigen Alkylpolyalkylolethercarbonsäuren und solche mit einem HLB-Wert unterhalb von 10.

Ebenso werden bevorzugt Alkyl- bzw. Alkylarylpolyalkylolethercarbonsäuren und/oder deren Derivate, die nur einen geringen Gehalt hydrophiler Begleitstoffe wie Polyalkylole enthalten, wie sie in DE 42 24 362 A1 angegeben sind.

Als Siliconöle werden handelsübliche, flüssige Silicone wie Polydimethylsiloxan. zyklische und niedrigmolekulare Polysiloxane und deren Mischungen eingesetzt. Die Viskosität der Silicone soll im Bereich von 20 bis 2000 mPas, vorzugsweise im Bereich von 20 bis 500 mPas liegen.

Weiterhin werden erfindungsgemäß auch Silicone, die durch organisch funktionelle Gruppen wie Amino-, Hydroxy-, Mercapto- und/oder Carboxylgruppen modifiziert sind, allein oder mit den bereits genannten Siliconen verwendet.

Die erfindungsgemäßen wasserfreien Mittel enthalten 10 bis 95 Gew.% Siliconöl und 5 bis 90 Gew.% Alkyl- und/oder Alkylarylpolyalkylolethercarbonsäuren und/oder deren Salze.

Bevorzugt ist jedoch eine wäßrige, insbesondere konzentrierte Emulsion, die a) 10 bis 90 Gew.% Siliconöl und b) 5 bis 30 Gew.% Alkyl- und/oder Alkylarylpolyalkylolethercarbonsäuren und/oder deren Salze und mindestens 5 Gew.% oder von der Menge der Anteile von a) und b) ergänzt bis zu 100 Gew.% Anteile Wasser enthält. Der pH-Wert der wäßrigen Emulsion kann ggf. durch Zusatz von Basen auf Werte im Bereich von 4 bis 12 eingestellt werden, vorzugsweise auf pH 5 bis 9, wozu Alkali- und Erdalkalihydroxide, Ammoniak, Amine und Alkanolamine, insbesondere Kalilauge, Natronlauge und Monoethanolamin verwendet werden.

Die erfindungsgemäßen wasserfreien Mittel und wäßrigen Emulsionen können zusätzlich weitere Bestandteile wie anionische Fettungsmittel und/oder andere, hydrophobierend wirkende Anteile wie flüssige oder feste Kohlenwasserstoffe, beispielsweise Paraffine, Weißöle und Mineralöle und/oder natürliche Öle und/oder natürliche und synthetische Wachse, Chlorparaffine und/oder Fettsäureester, z. B. Esteröle und Fettsäurepolyolester und oxidierte Paraffine enthalten.

So können die wasserfreien Mittel und wäßrigen Emulsionen auch andere Tenside und Emulgatoren, insbesondere nichtionogene Emulgatoren wie Sorbitol- und Sorbitanfettsäureester, Glycerinfettsäureester, Pentaerythrit - C₁₆- C₂₄ - Fettsäureester und/oder deren Oxalkylate, Fettsäuresarkoside und Alkylpolyglycoside, wie sie beispielsweise in EP 0 418 479 A1 beschrieben werden, enthalten.

Die wasserfreien Mittel und insbesondere die wässrigen Emulsionen können weiterhin Polymerisate und Copolymerisate aus hydrophoben Monomeren wie Alkyl(meth)acrylaten, Alkyl- oder Alkoxiphenolpolyalkylenoxid(meth)acrylaten, Alkenen, Vinylestern von Alkylcarbonsäuren und deren Mischungen und wasserlöslichen Monomeren wie ungesättigten C₁ - C₆ - Carbonsäuren, ungesättigten C₂ - C₆ -Dicarbonsäuren und/oder deren Derivate in einer Menge von 0,1 - 30 Gew.%, vorzugsweise von 1 - 15 Gew.% enthalten.

Zur Hydrophobierung von Leder und Pelzen werden die wasserfreien Mittel und Emulsionen vorzugsweise bei der Nachgerbung oder nach dieser Herstellungsstufe in wäßriger Flotte in einer Menge von 0,1 bis 30,0 Gew.%, vorzugsweise von 5.0 bis 15 Gew.%, bezogen auf das Falzgewicht der Leder bzw. auf das Naßgewicht der Pelze, eingesetzt.

Die Behandlungsflotte wird auf einen pH-Wert von 3,5 bis 8 eingestellt.
Die Behandlung erfolgt in den bekannten Vorrichtungen bei Flottenlängen von 50 bis 2000 %, bevorzugt von 80 bis 300 %, bezogen auf das Falzgewicht der Leder bzw. Naßgewicht der Pelze, unter Walken der Materialien bei Temperaturen von 10 bis 80 °C, vorzugsweise bei 20 bis 60°C.

Die Behandlungszeit beträgt bis zu 2 Stunden, vorzugsweise 60 bis 90 Minuten.

Zum Abschluß der Hydrophobierung wird der pH-Wert der Flotte in der Regel auf den Wert von 3,0 bis 4,0 mit organischen oder Mineralsäuren, üblicherweise mit Ameisensäure eingestellt.

Zur Verstärkung des Hydrophobierungseffektes kann eine zusätzliche Nachbehandlung der Leder und Pelze mit 2- bis 4-wertigen Metallsalzen der Kationen von Chrom, Aluminium, Zirkon und Titan, die in der Gerberei und bei der Hydrophobierung üblicherweise Verwendung finden, vorgenommen werden. Hierzu werden 0,5 bis 5,0 Gew.% mindestens eines Salzes, bezogen auf die angegebenen Falz- und Naßgewichte, zugesetzt.

Es ist hervorzuheben, daß die erfindungsgemäßen Emulsionen im Gegensatz zu Siliconemulsionen auf der Basis von Sarkosiden im Dispersionszustand auch stabil bleiben, wenn sie in wäßrigen, insbesondere stärker elektrolythaltigen, sauren Flotten im pH-Bereich bis 3,0, vorzugsweise bis 3,5 eingesetzt werden.

Weiterhin können erfindungsgemäß einfache, d.h. unmodifizierte Siloxantypen eingesetzt werden, ohne daß der Dispersionszustand der Behandlungsflotte bei solchen Bedingungen verändert wird.

Durch das Ausbleiben von Phasenumkehr- und Ausfällungseffekten, z. B. beim Absäuern der Behandlungsflotte werden qualitätsmindernde Abscheidungen von Bestandteilen der Dispersion auf der Lederoberfläche vermieden, und durch die verbesserte Verteilung der hydrophobierenden Komponenten im Leder bzw. Pelzleder werden verbesserte Eigenschaften dieser Produkte erreicht.

Die Erfindung wird durch die nachfolgenden Beispiele zusätzlich erläutert, die Angaben beziehen sich auf Gewichtsteile.

Die Messung der pH-Werte erfolgt jeweils in 10 gew.-%iger Verdünnung in destilliertem Wasser.

### Beispiel 1

57 Teile einer C₁₈-Alkyl (EO)₂-ethercarbonsäure werden unter Erwärmen und Rühren mit 15 Teilen eines Polydimethylsiloxans mit einer Viskosität von 350 mPas bei 50°C homogen vermischt. Nach Zusatz von 25 Teilen Wasser wird der pH-Wert mit 3 Teilen Monoethanolamin auf 6,4 eingestellt. Das Mittel mit einem Gehalt an wirksamer Substanz von 75 Gew.% bildet nach Verdünnung im Verhältnis 1 : 4 mit Wasser eine sehr stabile Emulsion.

### Beispiel 2

15 Teile der C₁₈-Alkyl (EO)₂-ethercarbonsäure werden unter Erwärmen auf 80°C mit 36,6 Teilen eines Mineralöls mit einem spezifischen Gewicht bei 15°C von 0,861 g/cm³, einer kinematischen Viskosität von 19 cSt bei 40°C bzw. 3,9 cSt bei 100°C und einem Siedebereich von 310 bis 480°C, und 5,3 Teilen eines Polydimethylsiloxans mit einer Viskosität von 350 mPas homogen vermischt und unter intensivem Rühren einer wäßrigen Phase, bestehend aus 41,3 Teilen Wasser und 6,1 Teilen Natronlauge, 50 Gew.%ig unter langsamem Zutropfen zugefügt. Der pH-Wert der Emulsion wird mit Natronlauge auf 8,0 bis 9,0 eingestellt und die Emulsion wird unter Rühren auf 40°C abgekühlt.

### Beispiel 3

Wie in Beispiel 2 angegeben, werden 43 Teile eines paraffinischen Mineralöls mit einem spezifischen Gewicht von 0,863 g/cm³ (bei 15°C), einer kinematischen Viskosität bei 40°C von 18 cSt und 3,7 cSt bei 100°C und einem Pourpoint von -18°C, mit 8 Teilen einer C₁₈-Alkyl (EO)₂-ethercarbonsäure und 5,3 Teilen eines Polydimethylsiloxans mit einer Viskosität von 350 mPas (bei 20°C), in eine wäßrige Phase aus 41,3 Teilen Wasser und 1.6 Teilen 50 %-ige, wäßrige Natronlauge gegeben. Der pH-Wert wird mit Natronlauge auf 8,0 bis 9,0 eingestellt.

### Beispiel 4

12,0 Teile einer C₁₂-Alkyl (EO)₄-ethercarbonsäure und 5,3 Teile Polydimethylsiloxan (Viskosität: 350 mPas) werden in gleicher Weise wie in Beispiel 2 mit 40 Teilen des dort angegebenen Mineralöls homogen vermischt und in 42 Teilen Wasser mit 1,6 Teilen 50 %-ige Natronlauge eingetragen. Der pH-Wert wird wiederum auf 8,0 bis 9,0 mit Natronlauge eingestellt.

### Beispiel 5

8 Teile einer C₁₈-Alkyl (EO)₂-ethercarbonsäure werden mit 2 Teilen des Polydimethylsiloxans (Viskosität 350 mPas) unter Rühren und Erwärmen homogen vermischt. Die Mischung wird durch Zugabe von Monoethanolamin neutralisiert und auf einen pH-Wert im Bereich von 8,0 bis 9,0 eingestellt.

### Beispiel 6

Es wird wie in Beispiel 2 verfahren und eine Emulsion unter Verwendung einer C₁₂ Alkyl (EO)_{2,5}-ethercarbonsäure anstelle der dort verwendeten Ethercarbonsäure hergestellt.

### Beispiel 7

Es wird wie in Beispiel 2 verfahren und eine Emulsion unter Verwendung einer C₁₈ Alkyl (EO)₅-ethercarbonsäure anstelle der dort verwendeten Ethercarbonsäure hergestellt.

### Beispiel 8

Es wird wie in Beispiel 2 verfahren und eine Emulsion unter Verwendung einer C₁₈ Alkyl (EO)₂-ethercarbonsäure anstelle der dort verwendeten Ethercarbonsäure hergestellt.

### Beispiel 9

Es wird wie in Beispiel 2 verfahren und eine Emulsion unter Verwendung einer C₉-Isoalkyl (PO)_{1,6} (EO)_{2,4}-ethercarbonsäure anstelle der dort verwendeten Ethercarbonsäure hergestellt.

### Vergleichsbeispiel 1

Es wird wie in Beispiel 2 verfahren und eine Emulsion unter Verwendung von N-Oleylsarkosin anstelle der dort verwendeten Ethercarbonsäure hergestellt.

### Vergleichsbeispiel 2

Es wird wie in Beispiel 2 verfahren und eine Emulsion unter Verwendung eines C₁₈-Fensäurearnid (EO)₃-ethoxilats anstelle der dort verwendeten Ethercarbonsäure hergestellt.

### Anwendungsbeispiele

Die Angaben zur Zusammensetzung der Behandlungsflotte erfolgen in Gew.%, bezogen auf das Falzgewicht.

Die erfindungsgemäßen Mittel werden zur Hydrophobierung von Leder verwendet, wobei chromgegerbte Rindleder (wet blue) mit einer Falzstärke von 1,8 bis 2,0 mm nach der Neutralisation, Nachgerbung und Färbung eingesetzt werden. Die Leder werden in 300 Gew.% Wasser 10 Minuten bei 60°C gewaschen. Nach dem Ablassen der Flotte erfolgt die Hydrophobierung bei 60°C mit einer Flotte, bestehend aus 100 Gew.% Wasser, 6,0 Gew.% der hydrophobierend wirkenden Substanz des erfindungsgemäßen Mittels, das in einer Verdünnung im Verhältnis 1 : 4 mit Wasser versetzt zugegeben wird. Die Behandlung erfolgt in einer Zeit von 60 Minuten. Anschließend wird mit 0,3 Gew.% Ameisensäure, die in einer 1 : 5 Verdünnung zugesetzt wird, 15 Minuten abgesäuert. Danach erfolgt die Fixierung mit 3,0 Gew.% Baychrom® A, das ungelöst zugesetzt wird. Nach weiteren 45 Minuten wird die Flotte abgelassen und das Leder 2 mal jeweils für 10 Minuten mit einer Wassermenge von 300 Gew.% bei 20°C gewaschen. Anschließend erfolgt die Fertigstellung: Leder über Nacht auf Bock, abwelken, ausrekken, vakuumieren bei 80°C/4 min., konditionieren, stollen und millen. Die Prüfung im Bally-Penetrometer erfolgt nach DIN 53 338 bei einer Stauchung von 10 %. Die Meßwerte sind in der folgenden Tabelle zusammen mit der Bewertung der Weichheit und Narbenfestigkeit zusammengefaßt. Die Bewertung umfaßt die Noten 1 (sehr gut) bis 6 (ungenügend).

**Tabelle 1**

| Mittel nach Beispiel | Ergebnis des Bally-Tests | | Bewertung der | |
|---|---|---|---|---|
| | Wasserdurchtrittszeit (Min) | Wasseraufnahme (%) | Weichheit | Narbenfestigkeit |
| | | | | |
| 1 | > 420 | 10 | 2-3 | 1-2 |
| 2 | > 420 | 16 | 3 | 1-2 |
| 3 | > 420 | 19 | 3 | 1-2 |
| 5 | > 420 | 23 | 3 | 2-3 |
| 7 | 55 | 36 | 3 | 2 |
| 8 | > 420 | 11 | 3 | 1-2 |
| Vergleichsbeisp. 1 | > 420 | 17 | 3 | 3-4 |
| Vergleichsbeisp. 2 | 12 | 76 | 3 | 2 |

### Stabilität der Dispersion in elektrolythaltiger Lösung

Ein Teil der Emulsion des Beispiels 2 wird in 4 Teilen einer Salzlösung, die 30 g Na₂SO₄ 10 H₂O/l enthält, bei 60°C unter Rühren dispergiert. Der pH-Wert der Emulsion wird mit Ameisensäure auf pH 3,5 eingestellt. Die Dispersion bleibt im Zustand stabil. Der Test wird unter Verwendung eines Teils der Emulsion gemäß Vergleichsbeispiel 1 wiederholt.
Die Dispersion bricht nach der pH-Einstellung auf den Wert 3,5 unter Abscheidung eines großen Teils der farblosen, vorher dispergierten Phase zusammen.

## Patentansprüche

1. Mittel zur Hydrophobierung von Leder und Pelzen, enthaltend mindestens ein Silicon und mindestens einen Emulgator, dadurch gekennzeichnet, daß es als Emulgator min-destens eine Alkylpolyalkylolethercarbonsäure und/oder Alkylarylpolyalkylolethercarbonsäure und/oder ein Alkali-, Erdalkali-, Ammoniak-, Amin- oder Alkanolaminsalz dieser Carbonsäuren enthält.

2. Mittel nach Anspruch 1, dadurch gekennzeichnet, daß es eine Mischung aus 10 bis 95 Gew.% Silicon und 5 bis 90 Gew.% Alkylpolyalkylolethercarbonsäure und/oder Alkylarylpolyalkylolethercarbonsäure und/oder ein Alkali-, Erdalkali-, Ammoniak-. Amin- oder Alkanolaminsalz dieser Carbonsäuren enthält.

3. Mittel nach Anspruch 1 oder 2, gekennzeichnet durch einen Gehalt einer Alkylpolyalkylolethercarbonsäure und/oder Alkylarylpolyalkylolethercarbonsäure der allgemeinen Formel 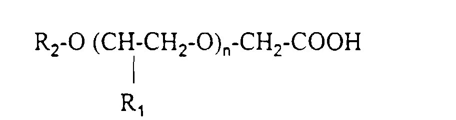 wobei
R₁ H, CH₃ und
R₂
- einen n- oder iso-Alkylrest mit 9 bis 30 C-Atomen, vorzugsweise mit 12 bis 22 C-Atomen, der gegebenenfalls eine oder mehrere olefinische Gruppen enthalten kann,
- einen Alkylarylrest oder Dialkylarylrest, bevorzugt bestehend aus einer Dialkylphenylgruppe mit Alkylresten mit 6 bis 10 C-Atomen, vorzugsweise 8 und/oder 9 C-Atomen,
und
- n einen Zahlenwert von 1 bis 20, vorzugsweise 1 bis 8 und insbesondere bevorzugt 1,5 bis 6
bedeuten
und/oder eine Alkali-, Erdalkali-, Ammoniak-, Amin- oder Alkanolaminsalzes dieund/oder eine Alkali-, Erdalkali-, Ammoniak-, Amin- oder Alkanolaminsalzes dieser Carbonsäuren.

4. Mittel nach einem der Ansprüch 1 bis 3, dadurch gekennzeichnet, daß es wasserfrei ist.

5. Mittel nach einem der Ansprüche 1 bis 3, dadurch gekennzeichnet, daß es wasserhaltig ist.

6. Mittel nach Anspruch 5, gekennzeichnet durch eine wäßrige Emulsion aus
a) 10 bis 90 Gew.% Silicon
b) 0,5 bis 70 Gew.% Emulgator,
c) 0 - 5 Gew.% einer Base und
d) mindestens 5 Gew.% oder von der Menge der Anteile a), b) und c) ergänzt zu 100 Gew.% Wasser
mit einem pH-Wert von 4 - 12.

7. Mittel nach Anspruch 5, gekennzeichnet durch eine wäßrige Emulsion aus
a) 10 bis 90 Gew.% Silicon
b) 0,5 bis 70 Gew.% Emulgator,
c) 0-5 Gew.% einer Base und
d) 1 - 80 Gew.% mindestens eines Mineralöls, synthetischen Esteröls und/oder natürlichen Öls und/oder ein anionisches Fettungsmittel
und
e) mindestens 5 Gew.% oder von der Menge der Anteile a), b), c) und d) ergänzt zu 100 Gew.% Wasser enthält
mit einem pH-Wert von 4 bis 12.

8. Verfahren zur Hydrophobierung von Leder und Pelzen in wäßriger Flotte, vorzugsweise bei der Nachgerbung oder danach, dadurch gekennzeichnet, daß die Mittel nach den Ansprüchen 1 bis 5 in einer wäßrigen Flotte in einer Menge von 0,1 bis 30,0 Gew.%, bezogen auf das Falzgewicht der Leder oder das Naßgewicht der Pelze, bei einem pH-Wert im Bereich von 3,5 bis 8,0 eingesetzt werden, und die Hydrophobierung unter Walken bei einer Temperatur der Flotte im Bereich von 10 bis 80°C, vorzugsweise von 20 bis 60°C erfolgt.

9. Verfahren zur Hydrophobierung von Leder und Pelzen nach Anspruch 8, dadurch gekennzeichnet, daß die Flotte im Anschluß an die Hydrophobierung mit organischen Säuren und/oder Mineralsäuren, vorzugsweise mit Ameisensäure, auf einen pH-Wert im Bereich von 3,0 bis 5,0 eingestellt wird und gegebenenfalls eine Nachbehandlung mit Metallsalzen zwei- bis vier-wertiger Kationen, vorzugsweise von Chrom, Aluminium, Zirkon und Titan vorgenommen wird.

## Claims

1. An agent for waterproofing leather and hides, containing at least one silicone and at least one emulsifier, characterized in that the agent includes at least one alkylpolyalkylol ether carboxylic acid and/or alkylarylpolyalkylol ether carboxylic acid and/or an alkali, alkaline earth, ammonia, amine, or alkanolamine salt of said carboxylic acids as emulsifier.

2. The agent according to claim 1, characterized in that the agent includes a mixture of from 10 to 95 wt.-% of silicone and from 5 to 90 wt.-% of alkylpolyalkylol ether carboxylic acid and/or alkylarylpolyalkylol ether carboxylic acid and/or an alkali, alkaline earth, ammonia, amine, or alkanolamine salt of said carboxylic acids.

3. The agent according to claim 1 or 2, characterized by a content of an alkylpolyalkylol ether carboxylic acid and/or alkylarylpolyalkylol ether carboxylic acid of general formula 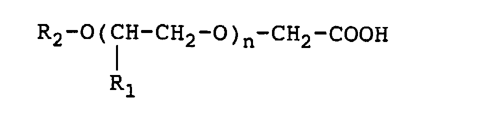 wherein
R₁ represents H, CH₃, and
R₂ represents an n- or isoalkyl residue having from 9 to 30 C atoms, preferably from 12 to 22 C atoms, which residue optionally may contain one or more olefinic groups,
an alkylaryl residue or dialkylaryl residue, preferably consisting of a dialkylphenyl group having alkyl residues of from 6 to 10 C atoms, preferably 8 and/or 9 C atoms,
and
n represents a numerical value of from 1 to 20, preferably from 1 to 8, and more preferably from 1.5 to 6, and/or an alkali, alkaline earth, ammonia, amine, or alkanolamine salt of said carboxylic acids.

4. The agent according to any of claims 1 to 3, characterized in that the agent is free of water.

5. The agent according to any of claims 1 to 3, characterized in that the agent contains water.

6. The agent according to claim 5, characterized by an aqueous emulsion of
a) from 10 to 90 wt.-% of silicone,
b) from 0.5 to 70 wt.-% of an emulsifier,
c) from 0 to 5 wt.-% of a base, and
d) at least 5 wt.-% or an amount of water so as to make 100 wt.-% with components a), b) and c),
which has a pH value of 4-12.

7. The agent according to claim 5, characterized by an aqueous emulsion of
a) from 10 to 90 wt.-% of silicone,
b) from 0.5 to 70 wt.-% of an emulsifier,
c) from 0 to 5 wt.-% of a base, and
d) from 1 to 80 wt.-% of at least one mineral oil, synthetic ester oil and/or natural oil and/or an anionic lubricant, and
e) at least 5 wt.-% or an amount of water so as to make 100 wt.-% with components a), b) c) and d),
which has a pH value of 4-12.

8. A process for waterproofing leather and hides in an aqueous bath, preferably during retanning or thereafter, characterized in that the agents according to claims 1 to 5 are employed in an aqueous bath in an amount of from 0.1 to 30.0 wt.-%, relative to the shaving weight of the leather or the wet weight of the hides, at a pH value ranging from 3.5 to 8.0, and that waterproofing is effected with milling at a bath temperature ranging from 10 to 80°C, preferably from 20 to 60°C.

9. The process for waterproofing leather and hides according to claim 8, characterized in that following waterproofing, the bath is adjusted to a pH value ranging from 3.0 to 5.0 using organic acids and/or mineral acids, preferably formic acid, and optionally, a secondary treatment is effected using metal salts of from bivalent to quadrivalent cations, preferably of chromium, aluminum, zirconium and titanium.

## Revendications

1. Agent pour imperméabiliser les cuirs et fourrures, contenant au moins un silicone et au moins un émulsifiant, caractérisé en ce qu'il comprend comme émulsifiant au moins un acide carboxylique d'alkylpolyalkyléther et/ou d'acide carboxylique d'alkylarylpolyalkyléther et/ou un sel alcalin, alcalin-terreux, ammoniac, amine ou alcanolamine de ces acides carboxyliques.

2. Agent selon la revendication 1, caractérisé en ce qu'il comprend un mélange de 10 % à 95 % poids de silicone et 5 % à 90 % poids d'acide carboxylique d'alkylpolyalkyléther et/ou d'acide carboxylique d'alkylarylpolyalkyléther et/ou un sel alcalin, alcalin-terreux, ammoniac, amine ou alcanolamine de ces acides carboxyliques.

3. Agent selon la revendication 1 ou 2, caractérisé par un titre d'un acide carboxylique d'alkylpolyalkyléther et/ou d'un acide carboxylique d'alkylarylpolyalkyléther de la formule générale 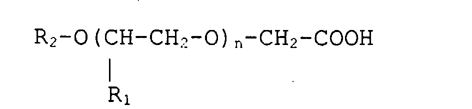
R₁ étant H, CH₃,
et
R₂ étant un radical n-alkyle ou iso-alkyle avec 9 à 30, de préférence 12 à 22 atomes de carbone, lequel peut le cas échéant comprendre un ou plusieurs groupes oléfiniques,
étant un radical alkylaryle ou dialkylaryle composé de préférence d'un groupe dialkylphényle avec des radicaux alkyles à 6 à 10, de préférence 8 et/ou 9 atomes de carbone,
et
n étant une valeur numérique comprise entre 1 et 20, de préférence 1 et 8, et plus particulièrement 1,5 et 6,
et/ou un sel alcalin, alcalin-terreux, ammoniac, amine ou alcanolamine de ces acides carboxyliques.

4. Agent selon l'une des revendications 1 à 3, caractérisé en ce qu'il est exempt d'eau.

5. Agent selon l'une des revendications 1 à 3, caractérisé en ce qu'il comprend de l'eau.

6. Agent selon la revendication 5 caractérisé par une émulsion aqueuse comprenant
a) 10 à 90 % poids de silicone,
b) 0,5 à 70 % poids d'émulsifiant,
c) 0 à 5 % poids d'une base et
d) de l'eau, à raison d'au moins 5 % poids ou ajoutée en quantité nécessaire aux éléments a), b) et c) pour atteindre 100 % poids,
présentant un pH compris entre 4 et 12.

7. Agent selon la revendication 5 caractérisé par une émulsion aqueuse comprenant
a) 10 à 90 % poids de silicone,
b) 0,5 à 70 % poids d'émulsifiant,
c) 0 à 5 % poids d'une base et
d) 1 à 80 % poids d' au moins une huile minérale, huile-ester synthétique et/ou huile naturelle et/ou lubrifiant anionique et
e) de l'eau, à raison d'au moins 5 % poids ou ajoutée en quantité nécessaire aux éléments a), b) c) et d) pour atteindre 100 % poids,
présentant un pH compris entre 4 et 12.

8. Procédé pour imperméabiliser les cuirs et fourrures dans un bain aqueux, de préférence pendant ou après le retannage, caractérisé en ce que l'agent selon les revendications 1 à 5 est employé dans un bain aqueux à raison de 0,1 à 30 % du poids des cuirs drayés ou du poids humide des fourrures, le pH étant compris entre 3,5 et 8,0, et en ce que l'imperméabilisation est effectuée au foulon à une température de bain comprise entre 10 et 80 °C, de préférence entre 20 et 60 °C.

9. Procédé pour imperméabiliser les cuirs et fourrures selon la revendication 8 caractérisé en ce qu'immédiatement après l'imperméabilisation, des acides organiques et/ou minéraux, de préférence de l'acide formique, sont employés pour amener le bain à un pH compris entre 3,0 et 5,0 et en ce que le cas échéant, on entreprend un traitement postérieur avec des sels métalliques à cations bi- à quadrivalents, de préférence des sels de chrome, aluminium, zirconium et titane.
